# FASCICULE DE BREVET EUROPEEN

(11) **EP 3 411 335 B1**
(45) Date de publication et mention de la délivrance du brevet: **04.12.2019**
(21) Numéro de dépôt: 17703398.2
(22) Date de dépôt: 03.02.2017
(51) Int. Cl.: C02F 1/28, C02F 101/30, B01D 15/18

(54) **DISPOSITIF ET PROCÉDÉ D'EXTRACTION DE SUBSTANCES SOLUBLES DISSOUTES DANS UNE SOLUTION AQUEUSE**
VORRICHTUNG UND VERFAHREN ZUR EXTRAKTION VON IN EINER WÄSSRIGEN LÖSUNG GELÖSTEN SUBSTANZEN
DEVICE AND METHOD FOR EXTRACTING SOLUBLE SUBSTANCES DISSOLVED IN AN AQUEOUS SOLUTION

(30) Priorité: 04.02.2016 FR 1650898
(43) Date de publication de la demande: 12.12.2018
(73) Titulaire: Bermudes, Marc, 97438 Sainte Marie (FR)
(72) Inventeur: Bermudes, Marc, 97438 Sainte Marie (FR)
(74) Mandataire: Lavoix
(86) Numéro de dépôt international: PCT/EP2017/052349
(87) Numéro de publication internationale: WO 2017/134205

(56) Documents cités:
- GB-A- 2 473 872
- US-A- 130 316
- US-A- 5 552 043
- US-A1- 2015 321 927
- US-B1- 6 582 595

## Description

La présente invention concerne un dispositif et un procédé d'extraction de substances solubles dissoutes dans une solution aqueuse. La présente invention concerne également l'utilisation de ce procédé dans la dépollution d'une solution aqueuse constituant par exemple des eaux de rejet industriel ou domestique.

La thématique de la pollution environnementale par les substances dissoutes telles que les micropolluants organiques n'est pas nouvelle. Les micropolluants organiques tels que les pesticides agricoles et autres molécules pharmaceutiques et vétérinaires ont depuis longtemps été détectés dans les eaux de rejet. La mise en place de différents plans de surveillance a permis de vérifier que ces pollutions ont une incidence sur la flore et plus gravement sur la faune avec le cas des perturbateurs endocriniens, mais aussi sur la santé des êtres humains. Les autorités européennes en la matière ont donc émis une Directive cadre de l'eau (directive 2000-60-CE) d'où doit émaner de la part des états membres de l'Union Européenne, une véritable volonté de supprimer cette pollution de l'eau au moyen de différentes mesures visant tout d'abord, la mise en place et le suivi de sites sensibles, puis par la suite, l'interdiction de production de certaines molécules indiquées sur une « liste de substances dangereuses prioritaires» (directive 2013/39/UE du parlement européen et du conseil du 12 août 2013 modifiant les directives 2000/60/CE et 2008/105/CE) et la détection de la pollution à sa source.

Les processus de traitement actuellement utilisés dans les Stations de Traitement des Eaux Usées (STEU) sont reconnus comme inefficaces dans le contexte des micropolluants organiques, tel que cela ressort de la circulaire du 29 septembre 2010 relative à la surveillance de la présence de micropolluants dans les eaux de rejetées au milieu naturel par les stations de traitement des eaux usées. Aussi, de nouvelles technologies sont apparues, plus ou moins efficientes, plus ou moins coûteuses et plus ou moins durables. Parmi ces nouvelles technologies, certaines produisent de 15 à 20% de déchets concentrés, par exemple l'osmose inverse qui permet de délivrer une eau pure mais qui devra être reminéralisée, les boues actives qui nécessitent une étape d'incinération, ou encore la filtration frontale. D'autres technologies physico-chimiques utilisent une réaction catalysée sous ultra-violet comme la photo-oxydation utilisant un catalyseur à base de molécules métalliques, par exemple le dioxyde de titane, qui par la suite est extrait du milieu au moyen de filtration ou de flottation, ou comme l'ozonation qui peut générer un ou plusieurs produits issus de la dégradation des micropolluants organiques plus dangereux pour l'environnement et la santé. D'autres nouvelles technologies plus durables telles que les extractions par voie enzymatique voient le jour et donnent des résultats intéressants, mais sont plus compliquées à contrôler et à dimensionner sur des STEU. D'autres technologies consistent également en la modification génétique des bactéries ayant une capacité de rétention des polluants, mais ces technologies posent problème d'un point de vue déontologique.

On connaît de FR 2 914 296, l'utilisation dans l'aquaculture, d'un procédé de traitement d'effluents aqueux comprenant une étape d'extraction d'au moins un composé gazeux dissous, mettant en œuvre l'injection d'une phase gazeuse dans une colonne d'effluent aqueux.

On connaît également de FR 2 952 370, un procédé de récupération de microparticules inertes ou vivantes de taille comprise entre 0,5 et 60 microns dans les effluents aqueux, tels que des flots bactériens, des colloïdes, des particules résiduelles inertes comme la boue, la silice ou l'argile, dans lequel, une phase gazeuse est injectée dans une colonne d'effluent aqueux. L'injection de la phase gazeuse dans l'effluent aqueux en bas de la colonne permet d'obtenir, en haut de la colonne, une écume comprenant un mélange polyphasique de l'effluent aqueux et de la phase gazeuse enrichi en microparticules inertes ou vivantes.

Néanmoins, ces procédés ne sont pas adaptés à l'extraction de substances dissoutes dans des grandes quantités de solution aqueuse.

Enfin, on connaît de FR 2 946 333, une installation de traitement d'eaux en vue de leur potabilisation, l'installation comprenant un unique réacteur au sein duquel le fluide aqueux est mis en contact avec un lit fluidisé de charbon actif coagulé et floculé.

Toutefois, ce type de réacteur n'est pas adapté pour le traitement de solutions aqueuses dont les concentrations en polluants est particulièrement variable et hétérogène.

US 5 552 043 A décrit un système modulaire d'adoucissement d'eau, incluant une pluralité de modules, comprenant chacun une enceinte, une entrée et une sortie d'eau ménagées au travers d'une paroi rapportée sur l'enceinte. Ce document prévoit aussi un chemin tortueux défini dans chaque module à l'aide de cloisons disposées dans l'enceinte du module.

Au vu des enjeux environnementaux de ces prochaines années, il existe un besoin de mettre en œuvre un procédé permettant d'extraire efficacement les polluants solubles dissouts dans les solutions aqueuses, tout en ne produisant pas de déchets supplémentaires non recyclables.

L'invention a donc pour objectif de fournir un dispositif d'extraction de substances solubles dissoutes dans une solution aqueuse particulièrement efficace, tout en étant particulièrement compact.

L'invention a également pour objectif de fournir un dispositif d'extraction particulièrement polyvalent et adaptable à des solutions aqueuses de compositions très diverses.

L'invention a également pour objectif de fournir un dispositif d'extraction respectueux de l'environnement qui ne génère pas de déchets non-recyclables.

L'invention a aussi pour objectif de fournir un dispositif d'extraction peu coûteux et facilement industrialisable.

De plus, l'invention a pour objectif de fournir un dispositif d'extraction dont l'entretien est particulièrement aisé.

L'invention a aussi pour objectif de fournir un procédé d'extraction, mis en œuvre avec le dispositif d'extraction, particulièrement efficace.

L'invention a pour objet un dispositif d'extraction selon la revendication 1.

Grâce à l'invention, le temps de contact entre la solution aqueuse est particulièrement élevé, sans que la compacité du dispositif ne soit trop importante. De ce fait, le dispositif est particulièrement efficace pour extraire les substances solubles de la solution aqueuse.

Selon d'autres caractéristiques avantageuses de l'invention, prises isolément ou en combinaison :
- une deuxième partie des modules amovibles sont des modules de paroi, formant ensemble une partie au moins de la paroi périphérique lorsque les modules de paroi sont montés au sein de l'assemblage modulaire ;
- un premier module de paroi, parmi les modules de paroi, définit un bord annulaire supérieur sur lequel un deuxième module de paroi, parmi les modules de paroi, est apte à être assemblé, par l'intermédiaire d'un bord annulaire inférieur défini par le deuxième module de paroi ;
- l'ouverture de passage d'un premier module de cloison, parmi les modules de cloison, est décalée par rapport à l'ouverture de passage d'un deuxième module de cloison, parmi les modules de cloison, lorsque le premier module de cloison et le deuxième module de cloison sont assemblés au sein de l'assemblage modulaire ;
- chaque module de cloison est conçu pour être interposé entre le bord annulaire inférieur et le bord annulaire supérieur ;
- au moins une première partie de l'agent adsorbant et une deuxième partie de l'agent adsorbant sont séparées par l'un des modules de cloison, la première partie de l'agent adsorbant présentant une granulométrie à une première valeur moyenne, la deuxième partie de l'agent adsorbant présentant une granulométrie à une deuxième valeur moyenne, différente de la première valeur moyenne ;
- au moins une majorité de la masse de l'agent adsorbant est constituée de charbon actif granulaire et/ou en poudre ;
- le dispositif d'extraction comprend au moins un bulleur, qui est apte à générer un flux de bulles dans la solution aqueuse circulant dans le labyrinthe, selon un sens de circulation dirigé depuis l'entrée principale vers la sortie principale ou depuis la sortie principale vers l'entrée principale ; et
- le dispositif d'extraction comprend un dispositif de mise sous pression, ou un dispositif de mise en dépression, de la solution aqueuse dans le labyrinthe.

L'invention a également pour objet un procédé d'extraction de substances solubles dissoutes dans une solution aqueuse, le procédé d'extraction étant caractérisé en ce qu'il est mis en œuvre à l'aide d'un dispositif d'extraction conforme à ce qui précède.

De manière avantageuse, le procédé comprend une étape dans laquelle on monte et/ou on démonte au moins l'un des modules amovibles en fonction d'au moins l'un des éléments suivants : concentration en substances solubles dissoutes dans la solution aqueuse destinée à circuler dans le labyrinthe, volume de solution aqueuse destinée à circuler dans le labyrinthe, débit de solution aqueuse destinée à circuler dans le labyrinthe.

L'invention a enfin pour objet une utilisation d'un procédé conforme à ce qui précède pour dépolluer une solution aqueuse, constituant par exemple des eaux de rejet industriel ou domestique.

L'invention sera mieux comprise à la lecture de la description qui va suivre, donnée uniquement à titre d'exemple non limitatif et non exhaustif et faite en se référant aux dessins dans lesquels :
- La figure 1 est une coupe longitudinale d'une installation de traitement comprenant un dispositif d'extraction conforme à un premier mode de réalisation de l'invention ;
- La figure 2 est une coupe longitudinale similaire à celle de la figure 1, à plus grande échelle, du dispositif d'extraction de la figure 1 ;
- La figure 3 est une vue schématique de dessus du dispositif d'extraction des figures 1 et 2, sur laquelle est représentée le trait de coupe I-I' des figures 1 et 2 ;
- Les figures 4 et 5 sont des vues schématiques de modules amovibles appartenant au dispositif d'extraction des figures 1 à 3 ; et
- Les figures 6 à 8 sont des coupes schématiques, similaires à celles de la figure 2, représentant chacune un dispositif d'extraction conforme à un mode de réalisation de l'invention.

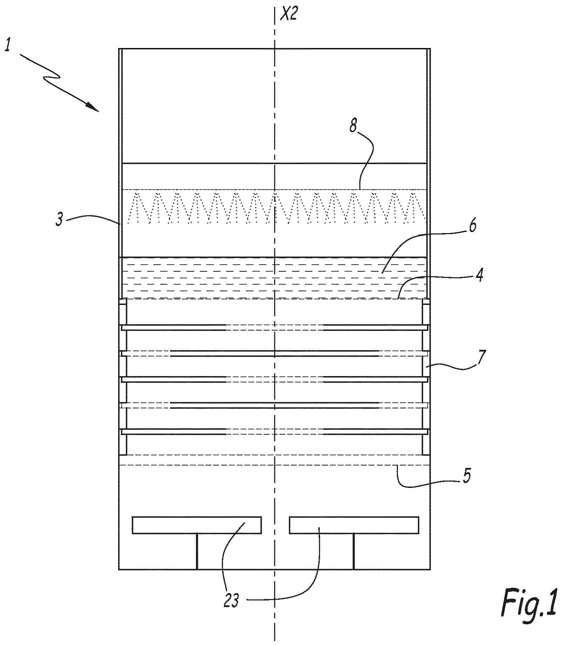

Dans ce qui suit, les termes « haut » et « supérieur » font référence à une direction verticale et orientée vers le haut sur les figures 1 à 3 et 6 à 8, les termes « bas » et « inférieur » faisant référence à une direction opposée.

L'installation 1 de traitement de solution aqueuse illustrée à la figure 1 inclut le dispositif 2 d'extraction, monté au sein d'une chambre 3 de l'installation 1. Par solution aqueuse, on entend toute eau contenant des substances solubles dissoutes et/ou eau polluée également appelée eau de rejet ou eau usée. L'eau de rejet peut notamment provenir de différentes sources telles que l'eau de rejet industriel provenant notamment des industries du secteur chimique, agrochimique, électrique, électronique, métallurgique, pharmaceutique, etc., les eaux de rejet domestique, etc.

Le dispositif 2 forme une cartouche, avantageusement modulaire, qui est introduite par l'intermédiaire d'une partie supérieure de la chambre 3. Cette chambre 3 entoure alors une paroi périphérique 7 du dispositif 2.

Le dispositif 2 est conçu pour extraire des substances solubles de la solution aqueuse, lorsque cette dernière est introduite en son sein par l'intermédiaire d'une entrée principale 4, qui est située en partie supérieure du dispositif 2. De préférence, les substances solubles sont des polluants et/ou substances dissoutes indésirables et/ou substances dissoutes extractibles. Par exemple, les substances solubles sont des substances volatiles et/ou des micropolluants organiques choisis parmi les composés pharmaceutiques, les composés vétérinaires, les pesticides ou une quelconque combinaison de ceux-ci. De préférence, les micropolluants organiques sont choisis parmi les composés pharmaceutiques tels que les antibiotiques, parmi les pesticides ou leur combinaison. Par micropolluants organiques on entend préférentiellement des composés chimiques synthétiques qui ne sont pas dégradés via un mécanisme naturel tel que la dégradation enzymatique ou qui sont dégradés en des composés chimiques présentant une nocivité supérieure aux composés chimiques d'origine. Par exemple, avant son passage au sein du dispositif 2, la solution aqueuse présente les caractéristiques suivantes, témoignant des substances solubles qu'elle contient :
- 7mg/l de DBO5 (demande biochimique en oxygène, c'est-à-dire la quantité d'oxygène nécessaire pour oxyder les matières organiques biodégradables par voie biologique, au bout de cinq jours et à 20°C, dans le noir),
- 30mg/l de DCO (demande chimique en oxygène), et
- 14mg/l de MES (matière en suspension).

Le dispositif 2 est apte à extraire également les substances solubles suivantes éventuellement contenus dans la solution aqueuse :

| **Classe** | **Famille** | **Molecule** |
|---|---|---|
| | Carbamate | Carbofuran |
| | Organo-phosphorés | Diazinon |
| | | Chlorpyrifos Methyl |
| | | Ethorpophos |
| | | Chlorpyrifos |
| | | Chlorfenvinphos |
| | | Azinphos Methyle |
| | | Azinphos Etyle |
| | Triazine | Atrazine |
| | | Desethyl Atrazine |
| | | Deisopropyl Atrazine |
| | | Terbuthylazine Desethyl |
| | | Simazine |
| | | Propazine |
| | | Cyanazine |
| | | Ametryn |
| | | Terbuthylazine |
| | Amines-amides, acétilamides | Oxadixvl |
| | | Metazachlor |
| Pesticides | | Dimethaclor |
| | | Tebutam |
| | Urée substituée | Diuron |
| | | 1(3,4DCP)-3M U |
| | | Chlorotoluron |
| | | Isoproturon |
| | | Linuron |
| | | Monuron |
| | | Monolinuron |
| | | Metoxuron |
| | Triazinone | Hexazinone |
| | Triazole | Fenpropidine |
| | | Tebuconazole |
| | Diazine | Bromacil |
| | Dérivés d'oxadiazole | Oxadiazon |
| | Imidazole | Prochloraz |
| | Acylanine | Metalaxyl |
| | pyridazinones | Norflurazon |
| | pyrimidinamines | Cyprodinyl |
| | benzamides | Propyzamide |
| | néonicotinoïdes | Imidachloprid |
| Antibiotiques | Sulfamide | Sulfanilamide |
| | Phénicolés | Chloramphenicol |
| | Quinolones | Enrofloxacin |
| | Pénicillines | Amoxicilin |
| | | Ampicillin |
| | Tétracycline | Tétracycline |

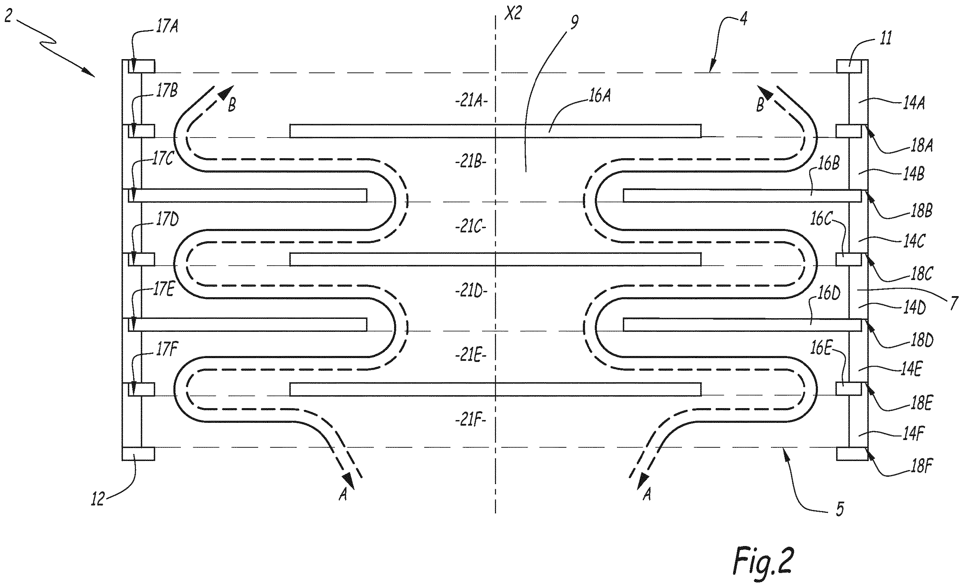

En pratique, l'installation 1 comprend un réservoir supérieur 6 de solution aqueuse disposé au-dessus de l'entrée principale 4, afin d'alimenter cette dernière par gravité. Dans le cas d'exemple illustré aux figures 1 et 2, la solution aqueuse est à pression atmosphérique. Le fond du réservoir 6 est préférentiellement ouvert sur toute la surface de l'entrée principale 4. Le réservoir 6 est lui-même alimenté en partie supérieure par une goulotte 8 de répartition, qui déverse de la solution aqueuse de façon répartie en surface de la solution aqueuse du réservoir 6. La solution aqueuse du réservoir 6 est ainsi peu agitée.

Depuis l'entrée 4, la solution aqueuse progresse par gravité vers le bas, au travers d'un labyrinthe 9 contenu au sein de la paroi périphérique 7, selon un chemin de circulation représenté symboliquement par des flèches A sur la figure 2. Après son passage dans le labyrinthe 9, la solution aqueuse atteint une sortie principale 5 du dispositif 2, disposée en partie inférieure de ce dernier : dès lors, au moins une partie des polluants solubles de la solution aqueuse a été extraite au sein du labyrinthe 9. Par « labyrinthe », on entend une structure creuse, formant un ou plusieurs corridors ou galeries, décrivant avantageusement des méandres et autorisant le passage de la solution aqueuse au travers du dispositif 2, depuis l'entrée principale 4 jusqu'à la sortie principale 5.

Le dispositif 2 est composé d'un assemblage modulaire de plusieurs modules amovibles empilés le long d'un axe principal X2 du dispositif 2, dont :
- un module d'entrée 11, comprenant l'entrée principale 4 et formant la partie supérieure du dispositif 2,
- un module de sortie 12, comprenant la sortie principale 5 et formant la partie inférieure du dispositif 2,
- six modules de paroi 14A, 14B, 14C, 14D, 14E et 14F, formant des paroi annulaires à section transversale rectangulaire, c'est-à-dire des cadres, les six modules de paroi 14A à 14F étant empilés les uns sur les autres par l'intermédiaire de leur bord annulaire inférieur respectif 18A, 18B, 18C, 18D et 18E en appui sur leur bord annulaire supérieur respectif 17B, 17C, 17D, 17E et 17F, pour former ensemble la paroi périphérique 7, le module d'entrée 11 reposant sur un bord annulaire supérieur 17 du module de paroi 14A le plus haut, et le module de paroi 14F le plus bas reposant sur le module de sortie 12 via un bord annulaire inférieur 18F du module 14F, et
- cinq modules de cloison 16A, 16B, 16C, 16D, et 16E, qui sont chacun intercalés entre deux modules de paroi 14A à 14F successifs, en reposant en pratique sur le bord annulaire supérieur 17B à 17F respectif des modules de paroi 14A à 14F, et qui forment chacun un plateau de forme rectangulaire, correspondant à celle de la section transversale rectangulaire de la paroi périphérique 7.

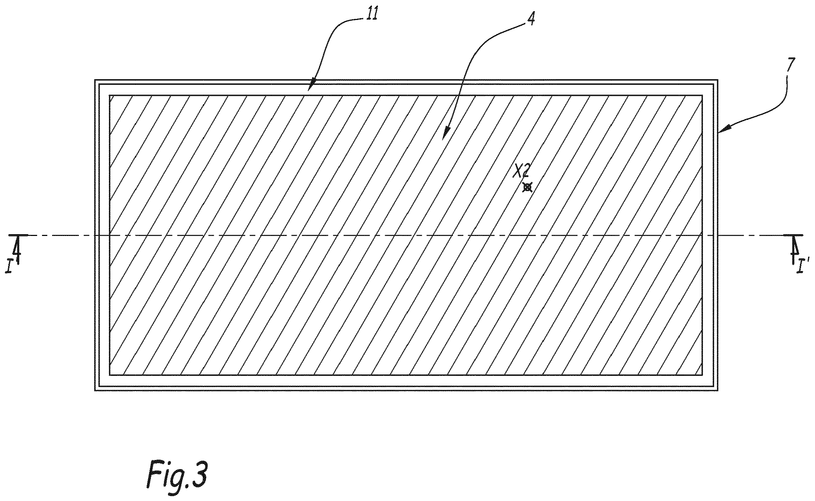

Le labyrinthe 9 est donc modulaire et peut donc être facilement modifié, par montage ou démontage des différents modules amovibles de l'assemblage. En particulier, les modules amovibles sont assemblés par empilement au sein de la chambre 3. En fonction des modules amovibles intégrés au sein de l'assemblage modulaire, la valeur du temps de contact entre l'agent adsorbant et la solution aqueuse à traiter est modifiée. En effet, selon le nombre et l'agencement des modules amovibles montés au sein de l'assemblage modulaire, le chemin A parcouru par la solution aqueuse est différent en longueur et/ou en sinuosité. L'efficacité de l'extraction de substances solubles peut ainsi être améliorée par sélection et montage des modules amovibles les plus adaptés en fonction la solution aqueuse à traiter, et notamment de la qualité de cette solution aqueuse, de l'origine de cette solution aqueuse, de sa composition et/ou de résultats obtenus au cours d'une phase de test d'extraction de substances solubles. De plus, la sélection et le montage des modules amovibles sont avantageusement effectués en fonction du volume de solution aqueuse à traiter. En outre, la sélection et le montage des modules amovibles sont préférentiellement effectués en fonction du débit de solution aqueuse destiné à traverser l'installation 1 et à être introduit dans le dispositif 2.Le module d'entrée 11, visible à la figure 3, forme un cadre rectangulaire correspondant à la section rectangulaire du module de paroi 14A sur lequel il repose, et comprend une ouverture, qui forme l'entrée principale 4 et s'étend quasiment toute la section transversale rectangulaire du module d'entrée 11. Le module de sortie 12 est similaire au module d'entrée, et comprend une ouverture qui forme la sortie principale 5.

Les modules de cloison 16A à 16E comprennent une cloison transverse qui est logée à l'intérieur de chaque module de paroi 14B à 14F de façon à obturer au moins partiellement la section transverse des modules de paroi 14B à 14F, et former le labyrinthe 9. En pratique, le labyrinthe 9 forme six logements internes 21A, 21B, 21C, 21D, 21E et 21F, délimitées chacun par l'un des modules de paroi 14A à 14F et par deux modules successifs parmi le module d'entrée 11, le module de sortie 12 et les modules de cloison 16A à 16F.

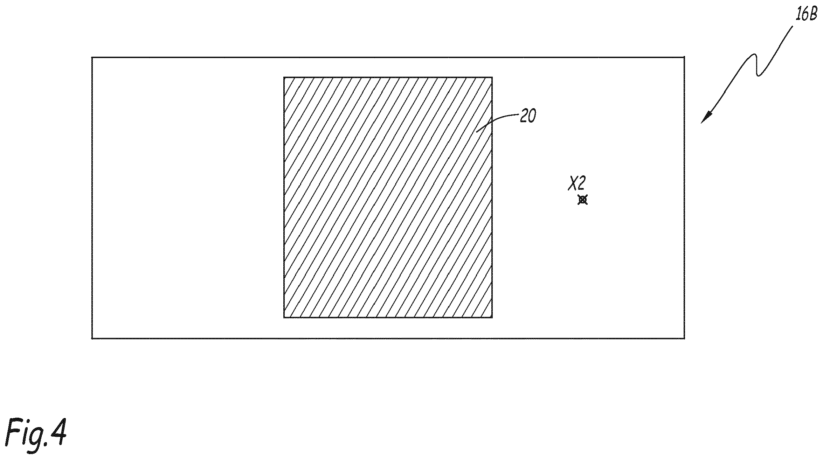

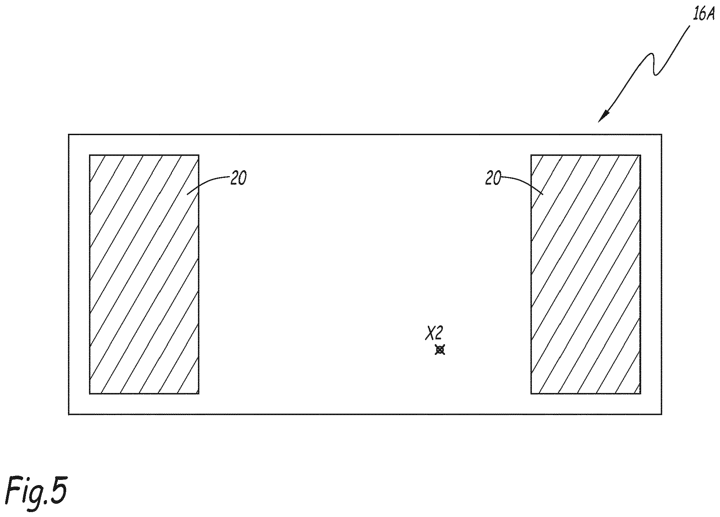

Les modules de cloison 16A à 16E comprennent au moins une ouverture de passage 20 de la solution aqueuse d'un premier des logements interne 21A à 21E jusqu'à un deuxième des logements internes 21B à 21F successif. Dans l'exemple de la figure 2, les modules de cloison 16A, 16C et 16E comprennent deux ouvertures de passage 20 ménagées au travers de la cloison transverse et répartis latéralement sur cette dernière, comme illustré à la figure 5. Les modules de cloison 16B et 16D ne sont pourvus quant à eux que d'une seule ouverture de passage 20 disposée de façon centrale, comme visible à la figure 4. La disposition des ouvertures de passage 20 au sein du labyrinthe 9 détermine le chemin A parcouru par la solution aqueuse. Les ouvertures de passage 20 des modules 16A, 16C et 16E sont décalées par rapport à celles des modules 16B et 16D, de sorte que le labyrinthe forme un chemin A sinueux pour la solution aqueuse, ce qui permet d'augmenter le temps de séjour de ladite solution au sein du labyrinthe 9.

On comprend que le nombre, l'ordre et la disposition des modules de cloison 16A à 16E au sein de l'assemblage modulaire peut être changé pour modifier le labyrinthe 9. Par exemple, on peut prévoir un nombre de modules de cloison inférieur à six, afin que le chemin A soit plus court et que le temps de contact entre la solution aqueuse et l'agent adsorbant soit réduit, ou au contraire supérieur à six, afin que le chemin A soit plus long et le temps de contact entre la solution aqueuse et l'agent adsorbant soit augmenté. Par ailleurs, on peut prévoir de monter uniquement des modules de cloison conformes au module de cloison 16B défini ci-avant, afin que la solution aqueuse suive un chemin A rectiligne. Alternativement, on peut prévoir une alternance de modules de cloison conformes au module 16A et 16B, comme illustré à la figure 2, afin de former un chemin A sinueux et ainsi augmenter le temps de contact entre la solution aqueuse et l'agent adsorbant. De même, le nombre de modules de paroi 14A à 14F peut être changé, ce qui change la longueur totale, mesurée parallèlement à l'axe X2, de la paroi périphérique 7, et donc du labyrinthe 9, ainsi que le nombre de modules de cloison qui peuvent être intégrés à l'assemblage modulaire.

De préférence, des garnitures d'étanchéité, non illustrées, sont prévues au moins entre les modules de paroi 14A à 14F, afin de garantir l'étanchéité et la continuité de la paroi périphérique 7. De même, d'autres garnitures d'étanchéité peuvent être prévues pour garantir l'étanchéité entre les modules d'entrée 11, de sortie 12 et la paroi périphérique 7.

Le dispositif 2 comprend également un agent adsorbant, qui est disposé dans au moins certains des logements internes 21A à 21F. Par agent adsorbant, on entend notamment tout composé ayant une surface spécifique de valeur suffisante pour extraire les substances solubles de la solution aqueuse par contact avec cette dernière, lors de son passage au sein du labyrinthe 9. Par exemple, l'agent adsorbant présente une surface spécifique dont la valeur est supérieure à 100m².g⁻¹, voire au-delà de 1000m².g⁻¹. Au moins la majorité en masse, de l'agent adsorbant est du charbon actif granulaire et/ou en poudre. De préférence, la totalité de l'agent adsorbant est du charbon actif. Le charbon actif mis en œuvre est de préférence issu du bois ou de noix de coco.

Ainsi, en fonction de la solution aqueuse à traiter, on dispose l'agent adsorbant de manière à remplir certains ou tous les logements 21A à 21F. Différentes parties de l'agent adsorbant sont ainsi séparées par les modules de cloison 16A à 16E. Pour éviter la migration de l'agent adsorbant d'un logement 21A à 21F à l'autre et hors du labyrinthe 9, chacune des ouvertures 4, 5 et 20 est avantageusement masquée par un filtre apte à retenir l'agent adsorbant tout en autorisant le passage de la solution aqueuse au travers du filtre. Par « filtre », on entend notamment toute cloison perforée ou grille apte à remplir cette fonction. Ces filtres sont par exemple réalisés en acier inoxydable, alors que les autres éléments des modules sont par exemple réalisés en matériau plastique, tel que du polypropylène.

Pour améliorer l'efficacité de l'extraction, on peut prévoir qu'une partie de l'agent adsorbant disposée dans l'un des logements 21A à 21F présente une granulométrie qui présente une valeur moyenne différente d'une autre partie de l'agent adsorbant disposée dans un autre des logements 21A à 21F. Par exemple, l'un des logements 21A à 21F peut contenir du charbon actif granulaire, alors qu'un autre des logements peut contenir du charbon actif en poudre. Le charbon actif granulaire présente par exemple une granulométrie moyenne d'environ 300 µm, alors que le charbon actif en poudre présente une granulométrie moyenne d'environ 20 µm. Dans ce cas, les filtres enfermant le charbon actif en poudre présentent une maille de valeur plus faible que ceux qui enferment le charbon actif granulaire, chaque filtre étant apte à retenir le charbon actif avec lequel il est en contact, tout en ayant la valeur de maille la plus élevée possible pour autoriser le passage de la solution aqueuse. Par exemple, les filtres pour le charbon actif en poudre présentent une valeur de maille d'environ 20 µm, les filtres relatifs au charbon actif granulaire présentent une valeur de maille d'environ 280 µm. En variante, un charbon actif en poudre de granulométrie moyenne encore plus faible peut être prévu, par exemple inférieure à 15µm, voire environ 1µm, la valeur de maille des filtres étant adaptée en conséquence.

Sans être lié à la théorie, il a été découvert de manière surprenante que l'injection simultanée d'une phase gazeuse et de la solution aqueuse dans le labyrinthe 9, combinée à l'utilisation du charbon actif en tant qu'agent adsorbant, permet d'améliorer significativement l'adsorption des polluants solubles sur le charbon actif. A compacité égale avec les dispositifs de l'art antérieur, le dispositif 2 permet d'extraire de la solution aqueuse une quantité de substances dissoutes environ cinq fois supérieure, par augmentation de la valeur du temps de contact entre l'agent adsorbant et la solution aqueuse.

En conséquence, le dispositif 2 peut comprendre deux bulleurs 23 aptes à émettre un flux de bulles de gaz au sein de la solution aqueuse circulant dans le labyrinthe 9, via la sortie principale 5, de sorte que les bulles progressent jusqu'à l'entrée principale 4 selon une flèche B visible sur la figure 2, à contre-courant de la solution aqueuse. Les bulles B remontent en pratique jusque dans le réservoir supérieur 6 et s'échappent de la surface supérieure de la solution aqueuse contenue dans ce réservoir 6, au voisinage de la goulotte 8. Les bulleurs 23 peuvent être aptes à produire un « microbullage », c'est-à-dire à produire des microbulles, ce qui améliore encore l'efficacité de l'extraction du dispositif 2. Le diamètre nominal moyen des microbulles s'élève à une valeur inférieure à environ 100µm. En pratique, on prévoit que les bulles présentent un diamètre nominal moyen compris entre environ 40µm et 2mm. Le gaz des bulles est préférentiellement de l'air. Alternativement, ce gaz est de l'ozone, du dioxygène ou de l'azote.

A titre d'exemple, dans le cas d'un dispositif 2 prévu pour fonctionner avec un débit de solution aqueuse traversant le labyrinthe 9 s'élevant à environ 3000L/h, l'épaisseur de chaque module de paroi 14A à 14F, mesurée parallèlement à l'axe X2 depuis leur bord supérieur 17A à 17F jusqu'à leur bord inférieur 18A à 18F, mesure environ 50mm, de sorte que l'épaisseur de chaque logement 21A à 21F est en pratique d'environ 40mm. Chaque module de cloison 16A à 16E mesure quant à lui environ 270mm de large et 570mm de long, de sorte que chaque logement 21A à 21F est apte à contenir jusqu'à 6.156 I d'agent adsorbant. Les ouvertures 4, 5 et 20 forment, pour chaque module 11, 12 et 16A à 16E, une section de passage de la solution aqueuse d'au moins 12 cm². Cette section de passage est préférentiellement supérieure à 100 cm² pour chacun des logements 21A à 21F afin de garantir un écoulement optimal de la solution aqueuse au sein du labyrinthe 9. Le flux de bulles est émis par les bulleurs 23 avec un débit de gaz compris entre environ 0 et 25m³/h, en fonction du débit de solution aqueuse.

Le dispositif 2 décrit ci-avant permet de mettre en œuvre un procédé d'extraction de substances solubles dissoutes dans la solution aqueuse au sein du labyrinthe 9 tel que décrit dans ce qui suit.

Ce procédé comprend une étape au cours de laquelle on monte et/ou on démonte au moins l'un des modules 14A à 14F ou 16A à 16E, afin de l'adapter à la solution aqueuse destinée à circuler dans le labyrinthe, ce qui permet d'obtenir une efficacité optimale de l'extraction au sein du dispositif 2. Cette étape est avantageusement effectuée à la suite d'une étape de test, au cours de laquelle on teste la qualité de la solution aqueuse afin de déterminer quel module 14A à 14F ou 16A à 16E intégrer dans l'assemblage modulaire.

De préférence, le procédé comprend en outre, avant l'étape de traitement, une étape de préfiltration de la solution aqueuse, par exemple à l'aide d'un filtre à sable de l'installation 1, non illustré, et/ou à l'aide d'un pré-écumage. L'étape de pré-filtration est mise en œuvre pour éliminer les matières en suspension de la solution aqueuse et permet ainsi d'améliorer l'extraction des substances solubles dans la solution aqueuse préfiltrée. L'étape de préfiltration peut par exemple être effectuée sous atmosphère modifiée, sous pression ou en dépression afin d'en optimiser le résultat.

De préférence, le procédé comprend en outre, après l'étape d'extraction au sein du dispositif 2, une étape de récupération de l'agent adsorbant, notamment dans le cas où ce dernier est du charbon actif. Cette étape de récupération est suivie d'une étape de régénération de l'agent adsorbant. De préférence, l'étape de régénération est un traitement thermique réalisé à une température élevée suffisante pour cette régénération, typiquement environ 700°C. L'agent adsorbant ainsi régénéré peut être à nouveau utilisé pour garnir le labyrinthe 9.

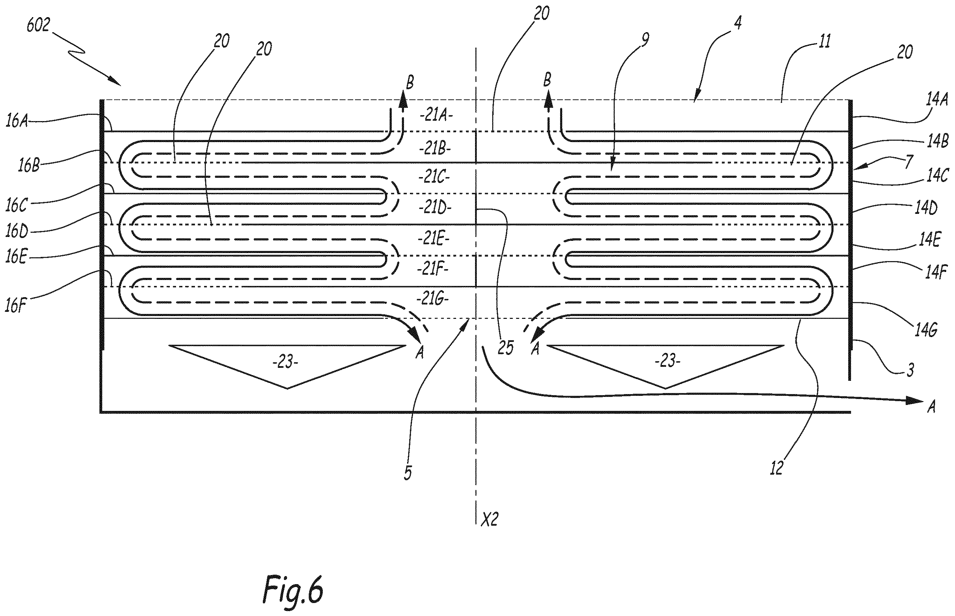

Les figures 6, 7 et 8 représentent respectivement des dispositifs 602, 702 et 802 d'extraction, selon d'autres modes de réalisations conformes à l'invention, les dispositifs 602, 702 et 802 présentant des caractéristiques similaires à celles du dispositif 2 décrit ci-avant, et qui ne sont pas décrites à nouveau ci-après, et des caractéristiques différentes, qui sont quant à elles décrites ci-après. Les caractéristiques communes aux dispositifs 2, 602, 702 et 802 sont référencées sur les figures avec les mêmes numéros de référence.

Le dispositif 602 de la figure 6 comprend une entrée principale 4, une sortie principale 5, une paroi périphérique 7, définissant un axe principal X2, et un labyrinthe 9 formé par un assemblage modulaire de modules amovibles incluant sept modules de paroi 14A à 14G, un module d'entrée 11, un module de sortie 12, et six modules de cloison 16A à 16F, pour former sept logements internes 21A à 21G dont certains au moins sont remplis d'agent adsorbant. Le dispositif 602 comprend également deux bulleurs 23 disposés sous la sortie principale 5. L'ouverture formant la sortie principale 5 occupe une surface plus réduite que l'ouverture formant l'entrée principale 4, et couvre une surface de passage équivalente à celle des ouvertures de passage 20 des modules de cloison 16A, 16C et 16E.

Le dispositif 602 diffère du dispositif 2 en ce qu'une cloison médiane 25, orientée parallèlement à l'axe X2, est disposée au sein des logements internes 21B, 21D et 21F, de façon à relier respectivement le module de cloison 16A avec le module de cloison 16B, le module de cloison 16C avec le module de cloison 16D, le module de cloison 16E avec le module de cloison 16F et ainsi séparer chacun de ces logements internes 21B, 21D et 21F en deux.

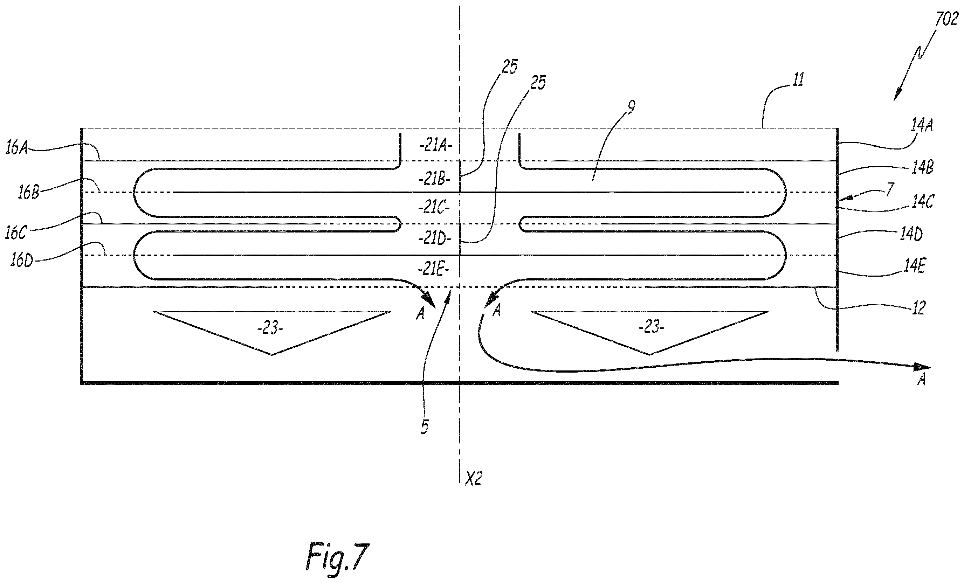

Le dispositif 702 de la figure 7 comprend une entrée principale 4, une sortie principale 5, une paroi périphérique 7, définissant un axe principal X2, et un labyrinthe 9 formé par un assemblage modulaire de modules amovibles incluant cinq modules de paroi 14A à 14E, un module d'entrée 11, un module de sortie 12, et quatre modules de cloison 16A à 16D, pour former cinq logements internes 21A à 21E dont certains au moins sont remplis d'agent adsorbant. Le dispositif 702 comprend également deux bulleurs 23 disposés sous la sortie principale 5, ainsi que deux cloisons médianes disposées dans les logements 21B et 21D.

Le dispositif 702 diffère du dispositif 602 et du dispositif en ce que la surface de l'ouverture 20 du module de cloison 16C est supérieure à celle de l'ouverture 20 du module de cloison 16A, et que la surface de l'ouverture de sortie 5 est supérieure à celle de l'ouverture 20 du module de cloison 16C, la surface de l'ouverture de sortie 5 étant néanmoins inférieure à celle de l'ouverture d'entrée 4.

Le dispositif 702 de la figure 7 comprend une entrée principale 4, une sortie principale 5, une paroi périphérique 7, définissant un axe principal X2, et un labyrinthe 9 formé par un assemblage modulaire de modules amovibles incluant cinq modules de paroi 14A à 14E, un module d'entrée 11, un module de sortie 12, et quatre modules de cloison 16A à 16D, pour former cinq logements internes 21A à 21E dont certains au moins sont remplis d'agent adsorbant. Le dispositif 702 comprend également deux bulleurs 23 disposés sous la sortie principale 5, ainsi que deux cloisons médianes disposées dans les logements 21B et 21D.

Le dispositif 702 diffère du dispositif 602 et du dispositif en ce que la surface de l'ouverture 20 du module de cloison 16C est supérieure à celle de l'ouverture 20 du module de cloison 16A, et que la surface de l'ouverture de sortie 5 est supérieure à celle de l'ouverture 20 du module de cloison 16C, la surface de l'ouverture de sortie 5 étant néanmoins inférieure à celle de l'ouverture d'entrée 4. L'écoulement de la solution aqueuse au sein du labyrinthe 9 est ainsi facilité.

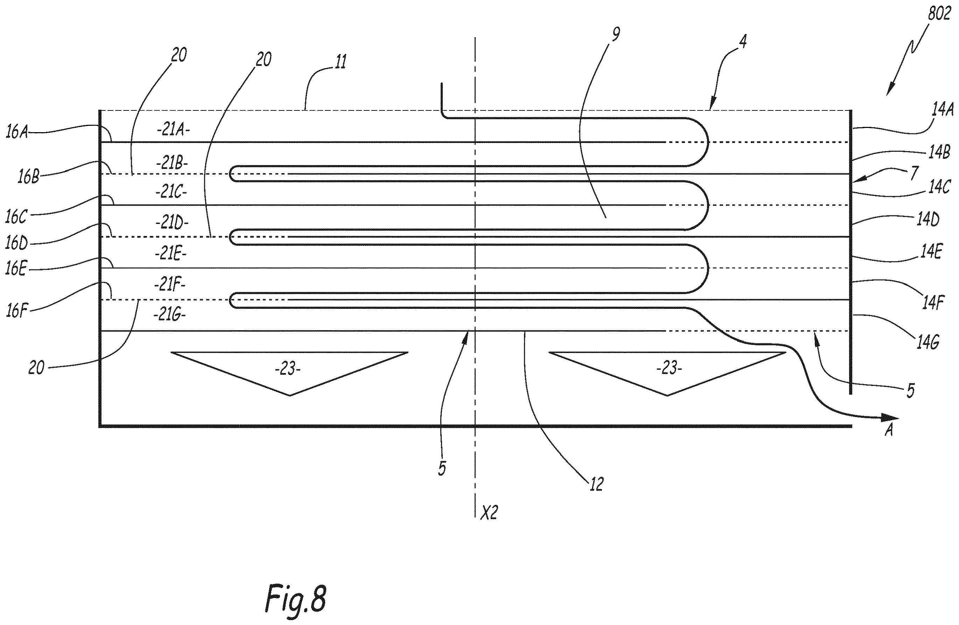

Le dispositif 802 de la figure 8 comprend une entrée principale 4, une sortie principale 5, une paroi périphérique 7, définissant un axe principal X2, et un labyrinthe 9 formé par un assemblage modulaire de modules amovibles incluant sept modules de paroi 14A à 14G, un module d'entrée 11, un module de sortie 12, et six modules de cloison 16A à 16F, pour former sept logements internes 21A à 21G dont certains au moins sont remplis d'agent adsorbant. Le dispositif 802 comprend également deux bulleurs 23 disposés sous la sortie principale 5.

Le dispositif 802 diffère du dispositif 2 en ce que chacun des modules de cloison 16A, 16C, et 16E présente une unique ouverture de passage 20, qui est disposée au voisinage d'une première extrémité de ces modules de cloison 16A, 16C et 16E, et qui s'étend sur une partie seulement de la cloison transverse des modules de cloison 16A, 16C et 16E. L'ouverture de sortie 5 et le module de sortie 12 présentent les mêmes caractéristiques que les ouvertures de passage des modules de cloison 16A, 16C et 16E. Les modules de cloison 16B, 16D et 16F présentent la disposition inverse par rapport aux modules 12, 16A, 16C et 16E, c'est-à-dire qu'ils comportent chacun une unique ouverture de passage 20 disposé à une deuxième extrémité, opposée à la première extrémité, et s'étendant sur une partie seulement de la surface de la cloison transverse de ces modules de cloison 16B, 16D et 16F. La disposition des ouvertures 5 et 20 au sein du labyrinthe 9 délimitent ainsi un chemin A particulièrement tortueux, ce qui permet d'augmenter le temps de contact entre la solution aqueuse et l'agent adsorbant, par rapport au cas du dispositif 2.

En variante, le dispositif d'extraction est disposé de façon que son axe principal ne soit pas vertical, mais incliné, voire horizontal.

Dans ce cas, le dispositif comprend de préférence un dispositif de mise sous pression, du genre pompe, de la solution aqueuse dans le labyrinthe, disposé au voisinage de l'entrée principal, qui fait progresser la solution aqueuse de l'entrée principale vers la sortie au travers de l'agent adsorbant. Dans ce cas, les bulleurs sont préférentiellement placés à proximité de l'entrée principale de sorte que le flux de bulles est émis de l'entrée principale vers la sortie principale, à co-courant de la solution aqueuse.

Alternativement à un dispositif de mise sous pression, un dispositif de mise en dépression peut être prévu au voisinage de la sortie principale pour obtenir le même effet. Le dispositif de mise en dépression est optionnellement pourvu d'un récupérateur du gaz contenu dans le flux de bulles, notamment dans le cas où ce gaz n'est pas de l'air et est par exemple de l'ozone. Ce récupérateur de gaz est par exemple disposé à la sortie principale. Le gaz récupéré est ensuite réintroduit dans le flux de gaz par les bulleurs.

En variante, un seul bulleur est prévu, ou un nombre de bulleurs supérieur à deux, par exemple quatre. On comprend que autant de bulleurs que nécessaire sont prévus dans le dispositif 2.

En variante, la paroi périphérique présente une section non rectangulaire, et de préférence circulaire, les modules amovibles étant alors adaptés en conséquence.

En variante, le labyrinthe du dispositif d'extraction délimite un chemin hélicoïdal de passage de la solution aqueuse, depuis l'entrée principale jusqu'à la sortie principale. Par hélicoïdal, on entend un chemin qui a la forme d'une hélice s'appuyant autour de l'axe principal du dispositif d'extraction. Les modules amovibles présentent une forme adaptée en conséquence.

En variante, une hauteur du dispositif d'extraction, mesurée parallèlement à l'axe X2 depuis le module d'entrée jusqu'au module de sortie, comprise entre 20 et 100 cm environ.

En variante, le dispositif d'extraction peut être mis en œuvre pour une installation domestique ou industrielle de traitement d'eaux usées, d'eaux d'alimentation, ou pour d'autres traitements de solutions aqueuses que ceux définis ci-avant, en permettant en tout cas d'extraire au moins une partie des substances soluble contenus dans la solution aqueuse traitée.

Les caractéristiques, modes de réalisation, variantes, et caractéristiques spécifiques et préférées décrites ci-dessus se combinent entre eux et s'appliquent au dispositif d'extraction de l'invention comme au procédé d'extraction de l'invention.

## Revendications

1. Dispositif (2; 602; 702; 802) d'extraction de substances solubles dissoutes dans une solution aqueuse, le dispositif d'extraction comprenant une paroi périphérique (7) et un agent adsorbant contenu dans cette paroi périphérique, l'agent adsorbant étant apte à extraire au moins une partie des substances solubles par contact avec la solution aqueuse,
le dispositif d'extraction (2; 602; 702; 802) comprenant en outre un labyrinthe (9), délimitant un chemin de circulation (A) de la solution aqueuse au sein de la paroi périphérique (7), le labyrinthe comprenant une entrée principale (4) et une sortie principale (5) de solution aqueuse reliées fluidiquement entre elles par le chemin de circulation, l'agent adsorbant étant disposé au sein du labyrinthe (9) de manière à être mis en contact avec la solution aqueuse lors de la circulation de cette dernière le long du chemin de circulation, le labyrinthe (9) comprenant en outre un assemblage modulaire de plusieurs modules amovibles (14A, 14B, 14C, 14D, 14E, 14F, 16A, 16B, 16C, 16D, 16E) chaque module amovible pouvant être monté sur, ou démonté de, l'assemblage modulaire afin de modifier le chemin de circulation (A),
**caractérisé en ce qu'**une première partie des modules amovibles sont des modules de cloison (16A, 16B, 16C, 16D, 16E), chaque module de cloison comprenant au moins une cloison transverse logée à l'intérieur de la paroi périphérique (7) lorsque le module de cloison est monté au sein de l'assemblage modulaire, de façon à obturer au moins partiellement une section transverse de la paroi périphérique, au moins une ouverture de passage (20) de la solution aqueuse étant ménagée au travers de la cloison transverse, la disposition des ouvertures de passage au sein du labyrinthe (9) déterminant le chemin de circulation (A) parcouru par la solution aqueuse.

2. Dispositif (2; 602; 702; 802) d'extraction selon la revendication 1, **caractérisé en ce qu'**une deuxième partie des modules amovibles (14A, 14B, 14C, 14D, 14E, 14F, 16A, 16B, 16C, 16D, 16E) sont des modules de paroi (14A, 14B, 14C, 14D, 14E, 14F), formant ensemble une partie au moins de la paroi périphérique (7) lorsque les modules de paroi sont montés au sein de l'assemblage modulaire.

3. Dispositif (2; 602; 702; 802) d'extraction selon la revendication 2, **caractérisé en ce qu'**un premier module de paroi (14A, 14B, 14C, 14D, 14E), parmi les modules de paroi, définit un bord annulaire supérieur (17A, 17B, 17C, 17D, 17E, 17F) sur lequel un deuxième module de paroi (14B, 14C, 14D, 14E, 14F), parmi les modules de paroi, est apte à être assemblé, par l'intermédiaire d'un bord annulaire inférieur (18A, 18B, 18C, 18D, 18E, 18F) défini par le deuxième module de paroi.

4. Dispositif (2; 602; 702; 802) d'extraction selon l'une quelconque des revendications précédentes, **caractérisé en ce que** l'ouverture de passage (20) d'un premier module de cloison (16A, 16C, 16E), parmi les modules de cloison, est décalée par rapport à l'ouverture de passage d'un deuxième module de cloison (16B, 16D), parmi les modules de cloison, lorsque le premier module de cloison et le deuxième module de cloison sont assemblés au sein de l'assemblage modulaire.

5. Dispositif (2; 602; 702; 802) d'extraction selon la revendication 3, ou selon la revendication 3 prise en combinaison avec la revendication 4, **caractérisé en ce que** chaque module de cloison (16A, 16B, 16C, 16D, 16E) est conçu pour être interposé entre le bord annulaire inférieur (18A, 18B, 18C, 18D, 18E, 18F) et le bord annulaire supérieur (17A, 17B, 17C, 17D, 17E, 17F).

6. Dispositif (2; 602; 702; 802) selon l'une quelconque des revendications précédentes, **caractérisé en ce qu'**au moins une première partie de l'agent adsorbant et une deuxième partie de l'agent adsorbant sont séparées par l'un des modules de cloison (16A, 16B, 16C, 16D, 16E), la première partie de l'agent adsorbant présentant une granulométrie à une première valeur moyenne, la deuxième partie de l'agent adsorbant présentant une granulométrie à une deuxième valeur moyenne, différente de la première valeur moyenne.

7. Dispositif (2; 602; 702; 802) d'extraction selon l'une quelconque des revendications précédentes, **caractérisé en ce qu'**au moins une majorité de la masse de l'agent adsorbant est constituée de charbon actif granulaire et/ou en poudre.

8. Dispositif (2; 602; 702; 802) d'extraction selon l'une quelconque des revendications précédentes, **caractérisé en ce qu'**il comprend au moins un bulleur (23), qui est apte à générer un flux de bulles (B) dans la solution aqueuse circulant dans le labyrinthe (9), selon un sens de circulation dirigé depuis l'entrée principale (4) vers la sortie principale (5) ou depuis la sortie principale vers l'entrée principale.

9. Dispositif (2; 602; 702; 802) d'extraction selon l'une quelconque des revendications précédentes, **caractérisé en ce qu'**il comprend un dispositif de mise sous pression, ou un dispositif de mise en dépression, de la solution aqueuse dans le labyrinthe (9).

10. Procédé d'extraction de substances solubles dissoutes dans une solution aqueuse, le procédé d'extraction étant **caractérisé en ce qu'**il est mis en œuvre à l'aide d'un dispositif (2; 602; 702; 802) d'extraction conforme à l'une quelconque des revendications précédentes.

11. Procédé d'extraction selon la revendication 10, **caractérisé en ce qu'**il comprend une étape dans laquelle on monte et/ou on démonte au moins l'un des modules amovibles en fonction d'au moins l'un des éléments suivants : concentration en substances solubles dissoutes dans la solution aqueuse destinée à circuler dans le labyrinthe (9), volume de solution aqueuse destinée à circuler dans le labyrinthe, débit de solution aqueuse destinée à circuler dans le labyrinthe.

12. Utilisation d'un procédé conforme à l'une quelconque des revendications 10 ou 11 pour dépolluer une solution aqueuse, constituant par exemple des eaux de rejet industriel ou domestique.

## Patentansprüche

1. Vorrichtung (2; 602; 702; 802) zur Extraktion von in einer wässrigen Lösung gelösten Substanzen, wobei die Extraktionsvorrichtung eine Umfangswand (7) und ein in dieser Umfangswand enthaltenes Adsorptionsmittel umfasst, wobei das Adsorptionsmittel imstande ist, wenigstens einen Teil der löslichen Substanzen durch Kontakt mit der wässrigen Lösung zu extrahieren,
wobei die Extraktionsvorrichtung (2; 602; 702; 802) ferner ein Labyrinth (9) umfasst, das einen Zirkulationsweg (A) für die wässrige Lösung innerhalb der Umfangswand (7) begrenzt, wobei das Labyrinth einen Haupteinlass (4) und einen Hauptauslass (5) für die wässrige Lösung umfasst, die durch den Zirkulationsweg miteinander verbunden sind, wobei das Adsorptionsmittel in dem Labyrinth (9) derart angeordnet ist, dass es mit der wässrigen Lösung in Kontakt gelangt, wenn diese entlang des Zirkulationswegs zirkuliert, wobei das Labyrinth (9) ferner eine modulare Anordnung mehrerer entfernbarer Module (14A, 14B, 14C, 14D, 14E, 14F, 16A, 16B, 16C, 16D, 16E) umfasst, wobei jedes entfernbare Modul an der modularen Anordnung montiert oder von dieser demontiert werden kann, um den Zirkulationsweg (A) zu verändern,
**dadurch gekennzeichnet, dass** es sich bei einem ersten Teil der entfernbaren Module um Trennwandmodule (16A, 16B, 16C, 16D, 16E) handelt, wobei jedes Trennwandmodul wenigstens eine quer verlaufende Trennwand umfasst, die im Inneren der Umfangswand (7) aufgenommen wird, wenn das Trennwandmodul in der modularen Anordnung montiert wird, um einen Querschnitt der Umfangswand wenigstens teilweise zu verschließen, wobei wenigstens eine Durchlassöffnung (20) für die wässrige Lösung durch die quer verlaufende Trennwand gebildet ist, wobei die Anordnung der Durchlassöffnungen in dem Labyrinth (9) den von der wässrigen Lösung durchlaufenen Zirkulationsweg (A) bestimmt.

2. Extraktionsvorrichtung (2; 602; 702; 802) nach Anspruch 1, **dadurch gekennzeichnet, dass** es sich bei einem zweiten Teil der entfernbaren Module (14A, 14B, 14C, 14D, 14E, 14F, 16A, 16B, 16C, 16D, 16E) um Wandmodule (14A, 14B, 14C, 14D, 14E, 14F) handelt, die gemeinsam wenigstens einen Teil der Umfangswand (7) bilden, wenn die Wandmodule in der modularen Anordnung montiert sind.

3. Extraktionsvorrichtung (2; 602; 702; 802) nach Anspruch 2, **dadurch gekennzeichnet, dass** ein erstes Wandmodul (14A, 14B, 14C, 14D, 14E) unter den Wandmodulen einen oberen ringförmigen Rand (17A, 17B, 17C, 17D, 17E, 17F) definiert, auf dem ein zweites Wandmodul (14B, 14C, 14D, 14E, 14F) unter den Wandmodulen unter Zwischenstellung eines unteren ringförmigen Rands (18A, 18B, 18C, 18D, 18E, 18F), der durch das zweite Wandmodul definiert wird, eingebaut werden kann.

4. Extraktionsvorrichtung (2; 602; 702; 802) nach einem der vorhergehenden Ansprüche, **dadurch gekennzeichnet, dass** die Durchlassöffnung (20) eines ersten Trennwandmoduls (16A, 16C, 16E) unter den Trennwandmodulen in Bezug auf die Durchlassöffnung eines zweiten Trennwandmoduls (16B, 16D) unter den Trennwandmodulen versetzt ist, wenn das erste Trennwandmodul und das zweite Trennwandmodul in die modulare Anordnung eingebaut sind.

5. Extraktionsvorrichtung (2; 602; 702; 802) nach Anspruch 3 oder nach Anspruch 3 in Kombination mit Anspruch 4, **dadurch gekennzeichnet, dass** jedes Trennwandmodul (16A, 16B, 16C, 16D, 16E) dafür ausgelegt ist, zwischen den unteren ringförmigen Rand (18A, 18B, 18C, 18D, 18E, 18F) und den oberen ringförmigen Rand (17A, 17B, 17C, 17D, 17E, 17F) zwischengeschaltet zu werden.

6. Vorrichtung (2; 602; 702; 802) nach einem der vorhergehenden Ansprüche, **dadurch gekennzeichnet, dass** wenigstens ein erster Teil des Adsorptionsmittels und ein zweiter Teil des Adsorptionsmittels durch eines der Trennwandmodule (16A, 16B, 16C, 16D, 16E) getrennt werden, wobei der erste Teil des Adsorptionsmittels eine Korngröße mit einem ersten Mittelwert aufweist und wobei der zweite Teil des Adsorptionsmittels eine Korngröße mit einem zweiten Mittelwert aufweist, der sich von dem ersten Mittelwert unterscheidet.

7. Extraktionsvorrichtung (2; 602; 702; 802) nach einem der vorhergehenden Ansprüche, **dadurch gekennzeichnet, dass** wenigstens ein Großteil der Masse des Adsorptionsmittels aus körniger und/oder pulverförmiger Aktivkohle besteht.

8. Extraktionsvorrichtung (2; 602; 702; 802) nach einem der vorhergehenden Ansprüche, **dadurch gekennzeichnet, dass** sie wenigstens eine Blasenbildungsvorrichtung (23) umfasst, die imstande ist, einen Strom von Blasen (B) in der in dem Labyrinth (9) zirkulierenden wässrigen Lösung gemäß einer Zirkulationsrichtung zu erzeugen, die vom Haupteinlass (4) zum Hauptauslass (5) oder vom Hauptauslass zum Haupteinlass gerichtet ist.

9. Extraktionsvorrichtung (2; 602; 702; 802) nach einem der vorhergehenden Ansprüche, **dadurch gekennzeichnet, dass** sie eine Vorrichtung zur Druckbeaufschlagung oder eine Vorrichtung zur Erzeugung eines Unterdrucks der wässrigen Lösung in dem Labyrinth (9) umfasst.

10. Verfahren zur Extraktion von in einer wässrigen Lösung gelösten Substanzen, wobei das Extraktionsverfahren **dadurch gekennzeichnet ist, dass** es mithilfe einer Extraktionsvorrichtung (2; 602; 702; 802) nach einem der vorhergehenden Ansprüche durchgeführt wird.

11. Extraktionsverfahren nach Anspruch 10, **dadurch gekennzeichnet, dass** es einen Schritt umfasst, bei dem wenigstens eines der entfernbaren Module in Abhängigkeit von wenigstens einem der folgenden Elemente montiert und/oder demontiert wird: Konzentration der löslichen Substanzen, die in der wässrigen Lösung gelöst sind, die dazu bestimmt ist, in dem Labyrinth (9) zu zirkulieren, Volumen der wässrigen Lösung, die dazu bestimmt ist, in dem Labyrinth zu zirkulieren, Durchsatz der wässrigen Lösung, die dazu bestimmt ist, in dem Labyrinth zu zirkulieren.

12. Verwendung eines Verfahrens nach einem der Ansprüche 10 oder 11 zur Reinigung einer wässrigen Lösung, die zum Beispiel aus Industrie- oder Haushaltsabwässern besteht.

## Claims

1. A device (2; 602; 702; 802) for extracting soluble substances dissolved in an aqueous solution, the extraction device comprising a peripheral wall (7) and an adsorbent agent contained in this peripheral wall, the adsorbent agent being capable of extracting at least one portion of the soluble substances by contact with the aqueous solution,
the extraction device (2; 602; 702; 802) comprising a maze (9), defining a circulation path (A) for the aqueous solution within the peripheral wall (7), the maze comprising a main inlet (4) and a main outlet (5) for the aqueous solution that are fluidly connected to one another by the circulation path, the adsorbent agent being arranged inside the maze (9) so as to be placed in contact with the aqueous solution during the circulation of the latter along the circulation path, the maze (9) further comprising a modular assembly of several removable modules (14A, 14B, 14C, 14D, 14E, 14F, 16A, 16B, 16C, 16D, 16E), each removable module being able to be assembled to, or disassembled from, the modular assembly in order to modify the circulation path (A),
**characterized in that** a first portion of the removable modules are partition modules (16A, 16B, 16C, 16D, 16E), each partition module comprising at least one transverse partition housed inside the peripheral wall (7) when the partition module is mounted within the modular assembly, so as to at least partially close a transverse section of the peripheral wall, at least one passage opening (20) for the aqueous solution being arranged through the transverse partition, the positioning of the passage openings within the maze (9) determining the circulation path (A) traveled by the aqueous solution.

2. The extraction device (2; 602; 702; 802) according to claim 1, **characterized in that** a second portion of the removable modules (14A, 14B, 14C, 14D, 14E, 14F, 16A, 16B, 16C, 16D, 16E) are wall modules (14A, 14B, 14C, 14D, 14E, 14F), together forming a portion at least of the peripheral wall (7) when the wall modules are mounted within the modular assembly.

3. The extraction device (2; 602; 702; 802) according to claim 2, **characterized in that** a first wall module (14A, 14B, 14C, 14D, 14E), from among the wall modules, defines an upper annular edge (17A, 17B, 17C, 17D, 17E, 17F) on which a second wall module (14B, 14C, 14D, 14E, 14F), from among the wall modules, is able to be assembled, via a lower annular edge (18A, 18B, 18C, 18D, 18E, 18F) defined by the second wall module.

4. The extraction device (2; 602; 702; 802) according to any one of the preceding claims, **characterized in that** the passage opening (20) of a first partition module (16A, 16C, 16E), among the partition modules, is offset relative to the passage opening of a second partition module (16B, 16D), among the partition modules, when the first partition module and the second partition module are assembled within the modular assembly.

5. The extraction device (2; 602; 702; 802) according to claim 3, or according to claim 3 combined with claim 4, **characterized in that** each partition module (16A, 16B, 16C, 16D, 16E) is designed to be inserted between the lower annular edge (18A, 18B, 18C, 18D, 18E, 18F) and the upper annular edge (17A, 17B, 17C, 17D, 17E, 17F).

6. The device (2; 602; 702; 802) according to any one of the preceding claims, **characterized in that** at least a first portion of the adsorbent agent and a second portion of the adsorbent agent are separated by one of the partition modules (16A, 16B, 16C, 16D, 16E), the first portion of the adsorbent agent having a particle size with a first mean value, the second portion of the adsorbent agent having a particle size with a second mean value, different from the first mean value.

7. The extraction device (2; 602; 702; 802) according to any one of the preceding claims, **characterized in that** at least a majority of the mass of the adsorbent agent is made up of granular and/or powdered activated carbon.

8. The extraction device (2; 602; 702; 802) according to any one of the preceding claims, **characterized in that** it comprises at least one bubbler (23), which is intended to generate a stream of bubbles (B) in the aqueous solution circulating in the maze (9), in a circulation direction oriented from the main inlet (4) toward the main outlet (5) or from the main outlet toward the main inlet.

9. The extraction device (2; 602; 702; 802) according to any one of the preceding claims, **characterized in that** it comprises a pressurizing device, or a depressurizing device, for the aqueous solution in the maze (9).

10. A method for extracting soluble substances dissolved in an aqueous solution, the extraction method being **characterized in that** it is carried out using an extraction device (2; 602; 702; 802) according to any one of the preceding claims.

11. The extraction method according to claim 10, **characterized in that** it comprises a step in which at least one of the removable modules is assembled and/or disassembled based on at least one of the following elements: concentration in soluble substances dissolved in the aqueous solution intended to circulate in the maze, volume of aqueous solution intended to circulate in the maze (9), flow rate of aqueous solution intended to circulate in the maze.

12. A use of a method according to any one of claims 10 or 11 in order to control pollution in an aqueous solution, for example constituting industrial or household wastewater.
